# EUROPÄISCHE PATENTSCHRIFT

(11) **EP 2 898 287 B1**
(45) Veröffentlichungstag und Bekanntmachung des Hinweises auf die Patenterteilung: **07.12.2016**
(21) Anmeldenummer: 13766280.5
(22) Anmeldetag: 20.09.2013
(51) Int. Cl.: F42B 3/26, B60R 21/26

(54) **ANZÜNDERTRÄGER, ANZÜNDEINHEIT UND VERFAHREN ZUR HERSTELLUNG EINER ANZÜNDEINHEIT**
IGNITER CARRIER, IGNITER UNIT AND METHOD FOR PRODUCING AN IGNITER UNIT
SUPPORT D'ALLUMEUR, UNITÉ D'ALLUMAGE ET PROCÉDÉ DE FABRICATION D'UNE UNITÉ D'ALLUMAGE

(30) Priorität: 21.09.2012 DE 102012217070
(43) Veröffentlichungstag der Anmeldung: 29.07.2015
(73) Patentinhaber: Schwuchow, Karsten, 83512 Wasserburg am Inn (DE)
(72) Erfinder: Schwuchow, Karsten, 83512 Wasserburg am Inn (DE)
(74) Vertreter: Ege & Lee Patentanwälte
(86) Internationale Anmeldenummer: PCT/EP2013/069640
(87) Internationale Veröffentlichungsnummer: WO 2014/044830

(56) Entgegenhaltungen:
- EP-A1- 1 849 519
- EP-A1- 1 995 551
- DE-A1-102007 019 285
- DE-A1-102009 013 603
- DE-B3-102005 047 768
- US-A1- 2005 121 894

## Beschreibung

Die Erfindung betrifft einen Anzünderträger für eine Anzündeinheit, insbesondere für einen Gasgenerator, aufweisend einen ersten Aufnahmeabschnitt für einen Anzünder, einen zweiten Aufnahmeabschnitt und einen Anbindungsabschnitt zum Anbringen der Anzündeinheit, eine Anzündeinheit, insbesondere für einen Gasgenerator, aufweisend einen Anzünder und einen Anzünderträger sowie ein Verfahren zur Herstellung einer derartigen Anzündeinheit.

Aus der DE 10 2009 013 603 A1 ist eine Baugruppe bekannt mit einem pyrotechnischen Anzünder, insbesondere für einen Gasgenerator, wobei der Anzünder Kontaktstifte zur elektrischen Kontaktierung aufweist, mit Anschlusskabeln, die an ihren freien Enden einen Anschluss aufweisen, der fest mit den Kontaktstiften des Anzünders verbunden ist, einer Halterung, in der der Anzünder befestigt ist und die einen Schnittstellenraum definiert, in den die Kontaktstifte des Anzünders hineinragen und in dem die Anschlusskabel mit den Kontaktstiften verbunden sind, und einer zusätzlichen Masseleitung, die die Halterung kontaktiert, wobei der Schnittstellenraum mit einer Vergussmasse gefüllt ist, die den Anschluss und die Masseleitung wenigstens abschnittsweise umgibt und positioniert, um eine Baugruppe mit einem einfach aufgebauten Anzünder zu schaffen.

Der Erfindung liegt die Aufgabe zugrunde, einen eingangs genannten Anzünderträger und eine eingangs genannte Anzündeinheit bereit zu stellen, der/die baulich und/oder funktional verbessert sind. Außerdem soll ein Verfahren zur Herstellung einer derartigen Anzündeinheit bereitgestellt werden. Insbesondere sollen der Anzünderträger und/oder die Anzündeinheit eine erhöhte Maßgenauigkeit aufweisen. Insbesondere sollen der Anzünderträger und/oder die Anzündeinheit hinsichtlich Herstellbarkeit und Funktion eine erhöhte Reproduzierbarkeit aufweisen. Insbesondere soll eine Herstellung mit verringertem Aufwand ermöglicht sein. Insbesondere soll eine Variabilität erhöht sein. Insbesondere sollen spanende Fertigungsverfahren, wie Drehen, vermieden sein. Insbesondere soll eine Warmfestigkeit erhöht sein. Insbesondere solle eine Wärmeleitfähigkeit erhöht sein. Insbesondere soll eine Widerstandsfähigkeit gegen Beschädigung erhöht sein. Insbesondere soll eine Korrosionsbeständigkeit erhöht sein.

Die Lösung der Aufgabe erfolgt mit einem Anzünderträger für eine Anzündeinheit, insbesondere für einen Gasgenerator, aufweisend einen ersten Aufnahmeabschnitt für einen Anzünder, einen zweiten Aufnahmeabschnitt und einen Anbindungsabschnitt zum Anbringen der Anzündeinheit, wobei der Anzünderträger aus mehreren miteinander verbundenen Einzelteilen vorgefertigt und in einem Montageprozess seinerseits als Einzelteil einer Baugruppe mit einem Anzünder zusammenbaubar ist.

Der Gasgenerator kann zur Verwendung in einem Fahrzeuginsassen-Rückhaltesystem dienen. Der Gasgenerator kann einen pyrotechnischen Treibsatz aufweisen. Der Gasgenerator kann ein Festtreibstoffgenerator oder ein Hybridgenerator mit einer Brennkammer mit Festbrennstoff und mit Druckgas sein. Der Gasgenerator kann ein Gehäuse aufweisen. Das Gehäuse kann einen rohrförmigen Abschnitt aufweisen.

Die Anzündeinheit kann in oder an dem Gehäuse des Gasgenerators anordenbar sein. Die Anzündeinheit kann bei ihrer Aktivierung ein heißes Gas und Partikel erzeugen, die in der Brennkammer den pyrotechnischen Treibsatz entzünden. Die Anzündeinheit kann elektrisch aktivierbar sein. Die Anzündeinheit kann den Anzünder, das Verbinderteil und den Anzünderträger aufweisen. Der Anzünder kann ein pyrotechnischer Anzünder sein. Der Anzünder kann ein elektrischer Anzünder sein. Der Anzünder kann ein Anzündergehäuse aufweisen. Der Anzünder kann elektrische Kontakte aufweisen.

Der Anzünderträger kann dazu dienen, den Anzünder lagegenau und/oder betriebssicher aufzunehmen. Dazu kann der erste Aufnahmeabschnitt dienen. Der Anzünderträger kann dazu dienen, das Verbinderteil lagegenau und/oder betriebssicher aufzunehmen. Dazu kann der zweite Aufnahmeabschnitt dienen. Der Anzünderträger kann dazu dienen, den Anzünder und das Verbinderteil in Bezug zueinander lagegenau und/oder betriebssicher zu tragen. Der Anzünderträger kann dazu dienen, den Anzünder und das Verbinderteil jeweils in Bezug zum Anzünderträger lagegenau und/oder betriebssicher zu tragen. Der Anzünderträger kann dazu dienen, die Anzündeinheit an dem Gasgenerator, insbesondere an dem Gehäuse des Gasgenerators, lagegenau und/oder betriebssicher anzuordnen. Dazu kann der Anbindungsabschnitt dienen.

Die miteinander verbundenen Einzelteile des Anzünderträgers können ihrerseits ein Einzelteil bilden. Die Anzündeinheit kann als Baugruppe aus mehreren Einzelteilen zusammenbaubar sein. Der Anzünderträger kann ein Einzelteil dieser als Baugruppe zusammenbaubaren Anzündeinheit bilden. Eine Baugruppe kann ein in sich geschlossener aus zwei oder mehr Teilen und/oder Baugruppen niederer Ordnung bestehender Gegenstand sein, wobei ein Einzelteil ein technisch beschriebener, nach einem bestimmten Arbeitsablauf zu fertigender bzw. gefertigter, nicht zerlegbarer Gegenstand sein kann.

Der zweite Aufnahmeabschnitt kann zur Aufnahme eines Verbinderteils dienen und der Anzünderträger kann in einem Montageprozess als Einzelteil einer Baugruppe mit einem Anzünder und einem Verbinderteil zusammenbaubar sein.

Das Verbinderteil kann ein Steckverbinderteil sein. Das Verbinderteil kann ein Kunststoffteil sein. Das Verbinderteil kann ein Steckernegativ aufweisen. Das Verbinderteil kann zur Aufnahme eines Steckers zum Kontaktieren des Anzünders dienen. Das Verbinderteil kann Rastnasen zur Verbindung mit dem Anzünderträger aufweisen. Das Verbinderteil kann eine topfartige Form mit einem Wandabschnitt und einem Bodenabschnitt aufweisen. In dem Bodenabschnitt können Durchführungen für Kontakte des Anzünders vorgesehen sein. Die Rastnasen können radial außen an dem Wandabschnitt angeordnet sein.

Der Anzünderträger kann aus wenigstens zwei miteinander verbundenen Einzelteilen vorgefertigt sein. Der Anzünderträger kann aus drei miteinander verbundenen Einzelteilen vorgefertigt sein. Die Einzelteile des Anzünderträgers können jeweils eine ringartige Form aufweisen. Ein Einzelteil des Anzünderträgers kann einen rechteckigen Querschnitt mit einem radial äußeren Rand aufweisen. Der radial äußere Rand kann den Anbindungsabschnitt bilden. Der radial äußere Rand kann einen größten Außendurchmesser des Anzünderträgers bilden. Dieses Einzelteil kann auch als Träger bezeichnet werden. Ein Einzelteil des Anzünderträgers kann einen Querschnitt mit einem hakenartig nach radial innen gerichteten Randabschnitt aufweisen. Dieses Einzelteil kann den zweiten Aufnahmeabschnitt bilden. Dieses Einzelteil kann auch als Orientierungsring bezeichnet werden. Ein Einzelteil des Anzünderträgers kann napfartig mit einem eingezogenen radial inneren Randabschnitt ausgeführt sein. Dieses Einzelteil kann den zweiten Aufnahmeabschnitt bilden. Dieses Einzelteil kann auch als Orientierungsring bezeichnet werden. Die napfartige Form kann durch Umformen aus einem Rohrabschnitt hergestellt sein. Die napfartige Form kann durch rollierendes Umformen aus einem Rohrabschnitt hergestellt sein. Die napfartige Form kann durch Krimpen hergestellt sein. Ein Einzelteil des Anzünderträgers kann einen Querschnitt mit einer radial innen angeordneten Schräge aufweisen, die einen Konusabschnitt bildet. Dieses Einzelteil kann den ersten Aufnahmeabschnitt bilden. Dieses Einzelteil kann auch als Anzünderring bezeichnet werden. Die Einzelteile des Anzünderträgers können entlang einer Achse angeordnet sein. Die Einzelteile des Anzünderträgers können zueinander koaxial angeordnet sein. Der Träger kann zwischen dem Orientierungsring und dem Anzünderring angeordnet sein.

Wenigstens zwei Einzelteile können jeweils unterschiedliche Werkstoffe aufweisen. Wenigstens zwei Einzelteile können unterschiedliche Werkstoffe aufweisen, wobei eine Werkstoffauswahl jeweils anforderungsgerecht getroffen ist. Bei der Werkstoffauswahl kann jeweils ein möglichst günstiger Werkstoff gewählt sein, der die jeweilige Anforderung hinreichend erfüllt. Eine Anforderung kann eine Festigkeit betreffen. Eine Anforderung kann eine elektrische Leitfähigkeit betreffen. Eine Anforderung kann einen Korrosionsschutz betreffen. Eine Anforderung kann eine Schweißbarkeit betreffen. Eine Anforderung kann eine Herstellbarkeit betreffen. Wenigstens zwei Einzelteile können miteinander stoffschlüssig verbunden sein. Wenigstens zwei Einzelteile können miteinander durch Schweißen verbunden sein. Wenigstens zwei Einzelteile können miteinander durch Kleben verbunden sein. Die Verbindung kann dicht ausgeführt sein. Bei der Verbindung kann eine vergleichsweise geringe Festigkeit akzeptiert sein. Wenigstens zwei Einzelteile können miteinander kraft- und/oder formschlüssig verbunden sein. Wenigstens zwei Einzelteile können miteinander durch Krimpen und/oder Rollieren verbunden sein.

Wenigstens ein Einzelteil kann in einem Stanzverfahren und/oder in einem Umformverfahren hergestellt sein. Das Umformverfahren kann ein Schmiedeverfahren sein. Das Umformverfahren kann ein Druckumformverfahren sein. Das Umformverfahren kann ein Fließpressverfahren sein. Wenigstens ein Einzelteil kann aus einem Blech hergestellt sein. Das Blech kann eine Dicke von ca. 2,0 bis ca. 4,5 mm, insbesondere ca. 3,5 mm, aufweisen.

Das wenigstens eine Einzelteil kann einen Einsatz aufweisen und das wenigstens eine Einzelteil und der Einsatz können jeweils unterschiedliche Werkstoffe aufweisen. Der Einsatz kann aus einem Edelstahl hergestellt sein. Der Einsatz kann aus einem dünnen Blech hergestellt sein. Der Einsatz kann in einem tiefziehverfahren hergestellt sein. Der Einsatz kann in Zuge eines ohnehin durchzuführenden Umformverfahrens mit eingeformt sein. Das wenigstens eine Einzelteil kann aus einem Nicht-Edelstahl hergestellt sein. Der Einsatz kann zum Korrosionsschutz und/oder zur sicheren elektrischen Kontaktierung dienen.

Ein erstes Einzelteil kann den Anbindungsabschnitt aufweisen und dieses erste Einzelteil kann einen hochfesten und gut schweißbaren Metallwerkstoff, wie Edelstahl, aufweisen. Das erste Einzelteil kann einen legierten Edelstahl aufweisen. Das erste Einzelteil kann einen nichtrostenden Stahl mit ≥ 2,5 % Nickel aufweisen. Das erste Einzelteil kann einen Stahl mit der Werkstoffnummer 1.4301 aufweisen. Bei der Auswahl des Werkstoffs des ersten Einzelteils kann eine Zerspanungseignung unwesentlich sein.

Ein zweites Einzelteil kann den ersten Aufnahmeabschnitt und/oder den zweiten Aufnahmeabschnitt aufweisen. Das zweite Einzelteil kann einen Metallwerkstoff, wie Stahl- oder Aluminiumlegierung, oder einen Kunststoffwerkstoff aufweisen.

Der Werkstoff des ersten Einzelteils kann hinsichtlich einer hohen Korrosionsbeständigkeit ausgewählt sein. Der Werkstoff des ersten Einzelteils kann hinsichtlich einer ausreichenden Festigkeit ausgewählt sein. Der Werkstoff des ersten Einzelteils kann hinsichtlich einer guten Schweißbarkeit ausgewählt sein.

Das zweite Einzelteil kann eine konturierte Ausnehmung zur orientierten Aufnahme eines Steckers aufweisen. Das zweite Einzelteil kann eine scheibenartige Form aufweisen. Die Ausnehmung kann einem Steckernegativ entsprechen. Das zweite Einzelteil kann eine integrierte Kurzschlussfeder aufweisen.

Der Anzünderträger kann einen mit einem Rastabschnitt eines Verbinderteils korrespondierenden Hinterschnittabschnitt aufweisen. Der Rastabschnitt kann mithilfe eines nach radial innen gerichteten Randabschnitts mit einem hakenartigen Querschnitt gebildet sein. Der Anzünderträger kann einen mit einem Führungsabschnitt eines Verbinderteils korrespondierenden Führungsabschnitt aufweisen. Der Anzünderträger kann wenigstens eine axial verlaufende Nut aufweisen, die dazu dient, mit einem Fortsatz des Verbinderteils zu korrespondieren. Der Anzünderträger kann wenigstens einen Fortsatz aufweisen, die dazu dient, mit einer axial verlaufenden Nut des Verbinderteils zu korrespondieren. Der Führungsabschnitt des Anzünderträgers und der Führungsabschnitt des Verbinderteils können eine Verdrehsicherung bilden. Damit können das Verbinderteil und der Anzünderträger zueinander ausgerichtet montiert werden.

Der Anzünderträger kann einen Randabschnitt aufweisen, der zum Fixieren eines Anzünders umformbar ist. Der Randabschnitt kann nach radial innen umformbar sein. Der Anzünderträger kann eine Anzündkammer bilden. Dafür kann der Anzünderträger eine topfartige Form aufweisen. Der Anzünderträger kann einen Konturabschnitt für ein mit dem Verbinderteil zu verbindendes korrespondierendes Verbinderteil aufweisen. Das korrespondierende Verbinderteil kann zu einem Stecker gehören. Der Konturabschnitt kann eine hakenartige Form aufweisen. Der Konturabschnitt kann an dem Anzünderträger angepresst sein. Der Konturabschnitt kann eine stiftartige Form aufweisen. Der Konturabschnitt kann mit dem Anzünderträger verschweißt sein. Das korrespondierende Verbinderteil kann ein Loch zur Aufnahme des stiftartigen Konturabschnitts aufweisen.

Wenigstens ein Einzelteil kann in ein Gehäuse eines Gasgenerators integrierbar sein. Das erste Einzelteil und/oder das zweite Einzelteil kann in ein Gehäuse eines Gasgenerators integrierbar sein. Eine Integration kann durch bündiges Verbinden erfolgen.

Außerdem erfolgt die Lösung der der Erfindung zugrundeliegenden Aufgabe mit einer Anzündeinheit, insbesondere für einen Gasgenerator, aufweisend einen Anzünder und einen derartigen Anzünderträger. Die Anzündeinheit kann ein Verbinderteil aufweisen. Der Anzünder kann mithilfe eines umgeformten Randabschnitts des Anzünderträgers, gegebenenfalls unter Verwendung eines Dichtelements, dicht an dem ersten Aufnahmeabschnitt des Anzünderträgers gehalten sein. Das Verbinderteil kann formschlüssig mit dem Anzünderträger verrastet sein. Mithilfe des Verbinderteils kann ein elektrischer Kontakt zu dem Anzünderträger herstellbar sein. Das Verbinderteil kann einen elektrischen Kontakt aufweisen. Dieser Kontakt kann eine elektrische Kontaktierung durch den Wandabschnitt des Verbinderteils hindurch ermöglichen.

Außerdem erfolgt die Lösung der der Erfindung zugrundeliegenden Aufgabe mit einem Verfahren zur Herstellung einer derartigen Anzündeinheit, umfassend wenigstens einen der Schritte Vorfertigen des Anzünderträgers, Einsetzen eines Dichtelements in den Anzünderträger, Ausrichten des Anzünders, Einsetzen des Anzünders in den Anzünderträger, Umformen eines Randabschnitts des Anzünderträgers zum Fixieren des Anzünders, Ausrichten des Verbinderteils und/oder Einsetzen des Verbinderteils in den Anzünderträger.

Der erfindungsgemäße Anzünderträger und/oder die Anzündeinheit ist kostengünstig herstellbar. Die Einzelteile der Anzündeinheit sind kostengünstig herstellbar. Der erfindungsgemäße Anzünderträger und/oder die Anzündeinheit weisen eine erhöhte Maßgenauigkeit auf. Der Anzünderträger und/oder die Anzündeinheit weisen hinsichtlich Herstellbarkeit und Funktion eine erhöhte Reproduzierbarkeit auf Eine Herstellung ist mit verringertem Aufwand ermöglicht. Eine Variabilität ist erhöht. Spanende Fertigungsverfahren, wie Drehen, sind vermieden. Eine Warmfestigkeit ist erhöht. Eine Wärmeleitfähigkeit ist erhöht. Eine Widerstandsfähigkeit gegen Beschädigung ist erhöht. Eine Korrosionsbeständigkeit ist erhöht.

Zusammenfassend und mit anderen Worten dargestellt ergibt sich somit durch die Erfindung unter anderem eine Anzündeinheit als Baugruppe, die in einem Rohr montiert werden kann, beispielsweise durch Schweißen, Nieten usw. Die Anzündeinheit kann einen zusammengesetzten Anzünderträger, einen O-Ring zur Abdichtung, einen Anzünder in Standardbauform, einen Retainer mit Steckernegativ, eine Kurzschlussfeder und eine Erdung als 3. Polstelle aufweisen. Die Anzündeinheit kann mit einem Gehäuse eines Gasgenerators, beispielsweise mit einem Rohr, verbindbar sein. Der zusammengesetzte Anzünderträger kann die Bauteile Träger, Anzünderring und Orientierungsring aufweisen.

Der Träger kann das tragende Element des zusammengesetzten Anzünderträgers sein. Der Träger kann als Ring mit Rechteckprofil ausgeführt sein. Erforderliche Tragfähigkeit kann über eine Festigkeit des Materials eingestellt sein. Die einfache Bauform des Trägers erlaubt auch einen Einsatz von hochfesten und gut schweißbaren Materialien, z. B. 1.4301, gegebenenfalls mit Vorverfestigung. Eine Vorverfestigung kann mit >600 MPa erfolgen. Der Träger kann aus einem korrosionsbeständigen Stahl hergestellt sein. An dem Außenbereich des Trägers können Konturen einfach erstellt werden, welche für das jeweilige Montageverfahren nötig sind.

Der Anzünderring kann als einfaches Fließpressteil oder Schmiedeteil hergestellt sein. Der Anzünderring kann aus einer Aluminiumlegierung hergestellt sein, welche eine ausreichende Festigkeit bei guter Korrosionsbeständigkeit aufweist. Alternativ können für sehr hohe Festigkeiten auch andere Materialien, wie Stahl, verwendet werden. Der Anzünderring kann stauchbare Schweißlippen aufweisen, die bei einem Schweißen abschmelzen. Der Anzünderring kann aus einem Kunststoff hergestellt sein, beispielsweise als Spritzteil. Der Anzünderring kann als Tiefziehteile aus Blech gefertigt sein. Der Anzünderring kann als tragendes Element genutzt sein. Der Anzünderring kann über seine Außenkontur variabel gestaltet sein, sodass er noch weitere Aufgaben übernehmen kann, wie die Aufnahme von Dichtungsringen, Füllkörpern oder anderen Elementen, die zum Betrieb eines Gasgenerators notwendig sind.

Der Orientierungsring kann, wie der Anzünderring, aus Stahl, einer Aluminiumlegierung oder Kunststoff hergestellt sein. Der Orientierungsring kann als Tiefziehteil aus Blech gefertigt sein.

Die Bauteile Anzünderring und Träger sind bevorzugt über ein Schweißverfahren miteinander verbunden. Möglich sind gängige Schweißverfahren, wie Widerstandsschweißen, Laserschweißen oder Reibschweißen. Die Festigkeitsanforderungen an die Schweißverbindung sind gering, da eine Belastung des zusammengesetzten Anzünderträgers mit einem Innendruck auf der Seite des Anzünders erfolgt. Schweißverfahren bieten eine hohe Dichtigkeit der Verbindungsstelle. Der Anzünderring kann auf den Träger aufgeklebt sein oder z. B. mittels Ultraschallschweißen befestigt sein. Eine Verbindungstechnologie zum Anbinden des Orientierungsrings kann einer Verbindungstechnologie der Verbindung zwischen Anzünderring und Träger entsprechen. Die Festigkeitsanforderungen sind gering und Dichtigkeit ist nicht erforderlich.

Für diesen Anzünderträger können bekannte Montageformen einsetzbar sein, so z. B. Nieten/Rollieren/Einpressen, bzw. Schweißverfahren, wie Laser- axial/radial, Widerstands-, Kondensatorentladungs-, Mittelfrequenz-, Reibschweißen usw. Die bekannten Montageverfahren können nutzbar sein.

Der Anzünderträger kann aus drei Einzelteilen mittels Schweißen vormontiert sein und der Anzünderträger kann mit einem Anzünder, einem Dichtelement, z. B. O-Ring, und einem Retainer zu einer Baugruppe Anzündeinheit vormontiert werden, welche im Aktivierungsfall ein pyrotechnisches Treibstoffbett, eventuell über eine zusätzliche Boosterladung, anzündet, wodurch der Gasgenerator Gas produziert, welches einen Airbag füllt. Die Einzelteile des Anzünderträgers können aus unterschiedlichen Materialien bestehen, welche vorzugsweise mittels Schweißen verbunden sind, sodass die Verbindung im erforderlichen Fall gasdicht ausgeführt werden kann. Die Einzelteile des Anzünderträgers können aus einfach und kostengünstig zu erstellenden Stanz-, Fließpress- und Schmiedeteilen bestehen. Das Einzelteil Träger kann als hauptsächlich im Aktivierungsfall die Belastung aufnehmendes Teil aus auch hochfestem Blechmaterial bestehen, was ebenfalls zur Verbindung mit dem Gasgeneratorgehäuse sich gut mittels verschiedener Verfahren, wie Laser, Kondensatorentladungs-, Mittelfrequenz-, Reibschweißen, schweißen lässt. Die Einzelteile Anzünderring und Orientierungsring können als Kunststoffspritzteile hergestellt sein, welche auf den Träger aufgeschweißt oder aufgeklebt werden, wobei der Träger nicht, wie beim Kunststoffspritzen, durch das den Kunststoff durchspritzende Öffnungen geschwächt wird. Das Einzelteil Träger kann aus hochfestem Stahlblech gestanzt und umgeformt werden zu belastungsgerechten Formen, wie zum Beispiel gewölbt oder Kalotte. Das Einzelteil Träger kann so gestaltet werden kann, dass es mit ausreichender Festigkeit den Beanspruchungen bei mechanischer Montage, z. B. Rollieren, Nieten, zur Integration in das Gasgeneratorgehäuse problemlos standhält und dabei den in ihm vormontierten Anzünder und Retainer schützt. Eine maximale Bauhöhe des Einzelteils Träger kann aus der Blechdicke ca. 2,0 bis ca. 4,5 mm, insbesondere ca. 3,5 mm, betragen, jedoch ist die Blechdicke variabel und niedrige Blechdicken sind einsetzbar, wobei die niedrigere Bauhöhe des Trägers durch eine vergrößerte Bauhöhe des Orientierungsringes kompensiert werden kann. Über den Träger, vorzugsweise aus einem korrosionsbeständigen Stahl und mit einer minimalen Bauhöhe von 3 mm (=Blechdicke) gefertigt, kann eine Erdung erfolgen, wie sie mit 3-poligen Steckern und Retainer realisiert werden kann, wenn der Träger einen elektrisch leitfähigen Kontakt zum Gehäuse des Gasgenerators bildet. Dieser zusammengesetzte Anzünderträger ermöglicht den Einsatz von Standardanzündern, wie derzeit nur durch zerspanend hergestellte Anzünderträger möglich. Der Träger, verbunden mit dem Gehäuse des Gasgenerators, sowie vorzugsweise aus Stahl oder Aluminium gefertigte Orientierungs- und Anzünderring gewährleisten eine sehr gute Wärmeleitung, wie sie im extremen Abbrandfall notwendig ist. Dies kann durch Bonfiretest und Abbrandtest im Rahmen einer BAM- und Transportzulassung geprüft werden. Der Anzünderring kann auch so gestaltet sein, dass er die Funktion eines Füllkörpers übernehmen kann und ein Volumen für z. B. eine Boosterladung bereitstellt. Der Orientierungsring, z. B. ausgeführt als einfaches Schmiede- oder Fließpressteil, kann auf einfache Weise einen für Rasthaken des Retainers und Stecker notwendigen Hinterschnitt ausbilden. Der Orientierungsring kann außen eine vom Zylinder abweichende Form oder sogar angepresste Formelemente haben, die zum Unterstützen des Steckers oder ähnlichem sinnvoll sind. Der Orientierungsring kann auch als Tiefziehteil ausgeführt werden, vorzugsweise aus maximal 1,5 mm dickem Blech gefertigt. Für zweistufige Gasgeneratoren, wie beispielsweise in den USA auf der Fahrer-und Beifahrerseite gesetzlich vorgeschrieben, können auf einfache Art zwei Anzündeinheiten in einer Baugruppe dargestellt werden. Der Träger kann auch als Stanzteil eine Außenkontur abweichend von der Zylinderform annehmen und somit kompatibel zu anderen Gehäuseteilen gestaltet werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Anzündeinheit mit einem Anzünder, einem Verbinderteil und einem Anzünderträger in einem Gehäuse eines Gasgenerators,
- Fig. 2: einen aus drei miteinander verbundenen Einzelteilen hergestellten Anzünderträger,
- Fig. 3: eine mit einem Gehäuse eines Gasgenerators radial verschweißte Anzündeinheit,
- Fig. 4: eine mit einem Gehäuse eines Gasgenerators axial verschweißte Anzündeinheit,
- Fig. 5: eine mit einem flachen Gehäuseabschnitt eines Gasgenerators verschweißte Anzündeinheit,
- Fig. 6: eine mit einem Gehäuse eines Gasgenerators formschlüssig verbundene Anzündeinheit,
- Fig. 7: eine mit einem Gehäuse eines Gasgenerators verschweißte Anzündeinheit mit einem Anzünderträger mit gefastem Träger,
- Fig. 8: eine mit einem Gehäuse eines Gasgenerators verschweißte Anzündeinheit mit einem Anzünderträger mit gewölbtem Träger,
- Fig. 9: eine mit einem Gehäuse eines Gasgenerators verschweißte Anzündeinheit mit einem Anzünderträger mit kalottenformigem Träger,
- Fig. 10: einen Anzünderträger mit tragendem Anzünderring,
- Fig. 11: einen Ausgleich einer reduzierten Trägerhöhe durch einen Orientierungsring,
- Fig. 12: eine Kontaktierung über ein Verbinderteil einer Anzündeinheit,
- Fig. 13: eine Anzündeinheit mit einem Anzünderträger, der eine Anzündkammer bildet,
- Fig. 14: eine Anzündeinheit mit einem Anzünderträger, der einen Konturabschnitt für einen Stecker aufweist,
- Fig. 15: eine Anzündeinheit mit einem Anzünderträger mit einem Orientierungsring als Tiefziehteil,
- Fig. 16: eine als Doppelanzündeinheit ausgeführte Anzündeinheit,
- Fig. 17: einen zusammengesetzten Anzünderträger mit einem aus einem Plattenmaterial gestanzten Orientierungsring,
- Fig. 18: einen dreiteiligen Anzünderträger mit einem napfförmigen Orientierungsring als Stanz- und Tiefziehteil,
- Fig. 19: einen Anzünderträger mit einem napfförmigen Orientierungsring, der durch rollierendes Umformen aus einem Rohrabschnitt hergestellt ist,
- Fig. 20: einen Anzünderträger mit einem Einsatz,
- Fig. 21: eine mit einem Gehäuse eines Gasgenerators laserverschweißte Anzündeinheit,
- Fig. 22: eine mit einem Gehäuse eines Gasgenerators widerstandsverschweißte Anzündeinheit,
- Fig. 23: eine mit einem Gehäuse eines Gasgenerators durch Krimpen/Rollieren verbundene Anzündeinheit,
- Fig. 24: eine Anzündeinheit, die mit einem Orientierungsring in ein Gehäuse eines Gasgenerators integriert ist,
- Fig. 25: eine Anzündeinheit mit einem Anzünderträger, der eine abgewinkelte Platte zur Führung eines Steckers aufweist,
- Fig. 26: eine Anzündeinheit mit einem Anzünderträger, der einen Stift zur Führung eines Steckers aufweist,
- Fig. 27: eine Anzündeinheit mit einem Anzünderträger, der einen Orientierungsring mit einer konturierten Ausnehmung zur orientierten Aufnahme eines Steckers aufweist und
- Fig. 28: einen Orientierungsring mit einer konturierten Ausnehmung zur orientierten Aufnahme eines Steckers.

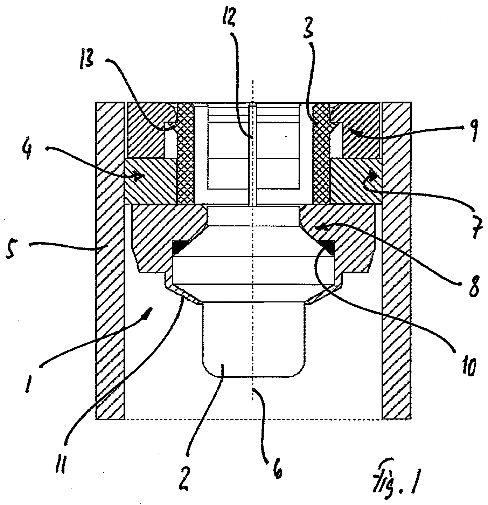

Fig. 1 zeigt eine Anzündeinheit 1 mit einem Anzünder 2, einem Verbinderteil 3 und einem Anzünderträger 4 in einem rohrförmigen Gehäuse 5 eines Gasgenerators. Vorliegend ist lediglich ein Abschnitt des Gasgenerators dargestellt, der die Anzündeinheit 1 aufweist. Eine Symmetrieachse ist mit 6 bezeichnet.

Der Anzünderträger 4 weist einen Anbindungsabschnitt 7 auf. Der Anbindungsabschnitt 7 dient zur Verbindung mit dem Gehäuse 5. Der Anzünderträger 4 weist einen Aufnahmeabschnitt 8 für den Anzünder 2 auf. Der Anzünderträger 4 weist einen Aufnahmeabschnitt 9 für das Verbinderteil 3 auf.

Der Anzünder 2 weist ein Anzündergehäuse auf, mit dem er an dem Aufnahmeabschnitt 8 anliegend aufgenommen ist. Zwischen dem Anzünder 2 und dem Aufnahmeabschnitt 8 ist eine O-Ring-Dichtung 10 angeordnet. Der Anzünder 2 ist mithilfe eines umgeformten Randabschnitts 11 des Anzünderträgers 4 fixiert. Der Anzünder 2 weist stiftförmige Kontakte 12 auf.

Das Verbinderteil 3 weist eine topfartige Form mit einem Bodenabschnitt und einem Wandabschnitt auf Radial außen an dem Wandabschnitt weist das Verbinderteil 3 Rasthaken 13 auf. Das Verbinderteil 3 ist mit dem Anzünderträger 4 in axialer Richtung verrastet. Das Verbinderteil 3 bildet eine Aufnahme für einen Stecker zum Kontaktieren der Kontakte 12. Die Kontakte 12 ragen durch den Bodenabschnitt des Verbinderteils 3 in die Aufnahme. Das Verbinderteil 3 ist aus Kunststoff hergestellt.

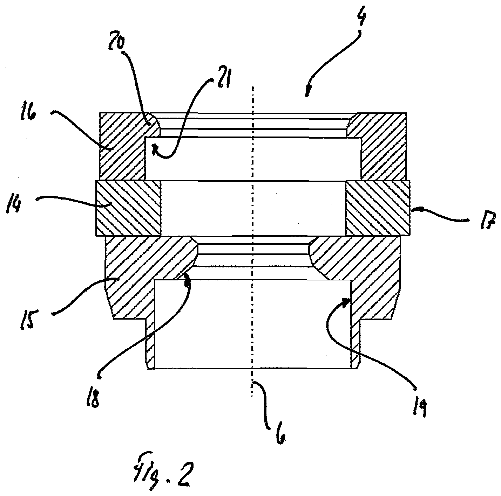

Fig. 2 zeigt einen aus drei miteinander verbundenen Einzelteilen hergestellten Anzünderträger 4, wie Anzünderträger 4 gemäß Fig. 1. Der Anzünderträger 4 weist einen Träger 14, einen Anzünderring 15 und einen Orientierungsring 16 auf. Der Träger 14, der Anzünderring 15 und der Orientierungsring 16 sind zueinander konzentrisch entlang der Achse 6 angeordnet. Der Träger 14 ist zwischen dem Anzünderring 15 und dem Orientierungsring 16 angeordnet.

Der Träger 14 ist als Ring mit einem rechteckigen Querschnitt ausgeführt. Der Träger 14 weist radial außen eine Anlagefläche 17 zur Verbindung mit einem Gehäuse eines Gasgenerators auf. Die Anlagefläche 17 bildet den größten Außendurchmesser des Anzünderträgers 4. Der Anzünderring 15 weist einen L-artigen Querschnitt auf. Der Anzünderring 15 weist eine konusförmige Anlagefläche 18 auf. Der Anzünderring 15 weist radial innen eine Anlagefläche 19 auf Die Anlageflächen 18, 19 dienen zur Anlage eines Anzünders. Der Anzünderring 15 weist einen umformbaren Randabschnitt 11 auf. Der Randabschnitt 11 dient zum Fixieren des Anzünders. Der Orientierungsring 16 weist einen Querschnitt mit einem nach radial innen gerichteten hakenartigen Fortsatz 20 auf. Damit ist ein ringförmiger Hinterschnitt 21 gebildet. Der Hinterschnitt 21 dient zum Verrasten von Rasthaken eines Verbinderteils.

Der Träger 14 ist aus einem hochfesten und gut schweißbaren Material hergestellt, beispielsweise aus Edelstahl. Der Anzünderring 15 und der Orientierungsring 16 sind aus einem Material hergestellt, das eine ausreichende Festigkeit bei guter Korrosionsbeständigkeit aufweist, beispielsweise aus Stahl, einer Aluminiumlegierung oder Kunststoff. Der Träger 14, der Anzünderring 15 und der Orientierungsring 16 sind miteinander fest zu einem Einzelteil verbunden, das in einer Baugruppe verbaubar ist. Der Träger 14, einen Anzünderring 15 und einen Orientierungsring 16 sind beispielsweise miteinander verschweißt.

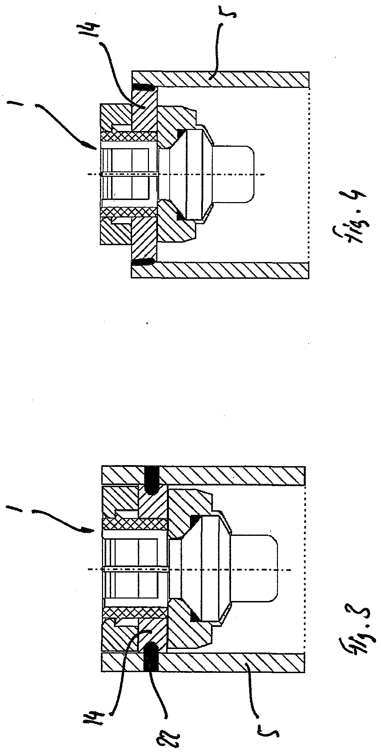

Fig. 3 zeigt eine mit einem Gehäuse 5 eines Gasgenerators radial verschweißte Anzündeinheit 1. Die Anzündeinheit 1 ist über einen Träger 14 in ein Gehäuse 5 eingepresst und radial verschweißt mittels Laser oder in der Art ähnlichen Verfahren. Eine Schweißnaht ist mit 22 bezeichnet.

Fig. 4 zeigt eine mit einem Gehäuse 5 eines Gasgenerators axial verschweißte Anzündeinheit 1. Der Träger 14 weist einen vergrößerten Durchmesser auf, ist in das Gehäuse eingepresst und mit diesem bevorzugt in axialer Richtung verschweißt.

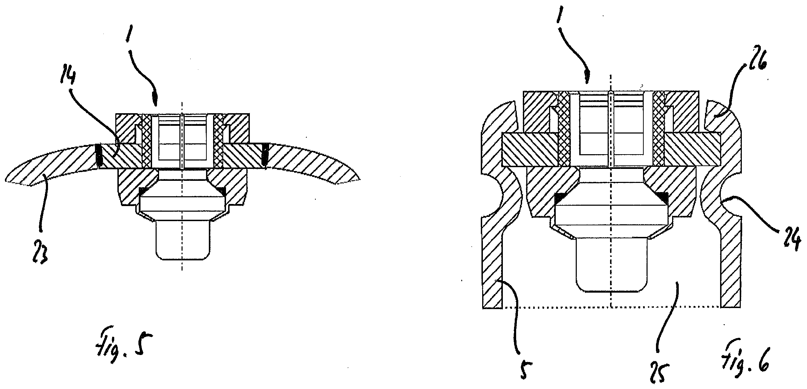

Fig. 5 zeigt eine mit einem flachen Gehäuseabschnitt 23 eines Gasgenerators verschweißte Anzündeinheit 1. Der Träger 14 weist einen vergrößerten Durchmesser auf und ist in die Wandung eines Gasgeneratorgehäuses mit eher flacher Bauform (Fahrerseite) eingepresst und in vorwiegend axialer Richtung verschweißt.

Fig. 6 zeigt eine mit einem Gehäuse 5 eines Gasgenerators formschlüssig verbundene Anzündeinheit 1. Die Anzündeinheit 1 ist unter Nutzung mechanischer Umformung fixiert. Die Anzündeinheit 1 ist in das Gehäuse 5 eingepresst. Eine Rollierung 24 (unten) verhindert ein Durchrutschen in den Innenraum 25 und stützt bei einem weiteren Umformvorgang (oben) die Anzündeinheit 1. Die weitere Umformung 26 kann als Rollierung oder auch als Nietung erfolgen.

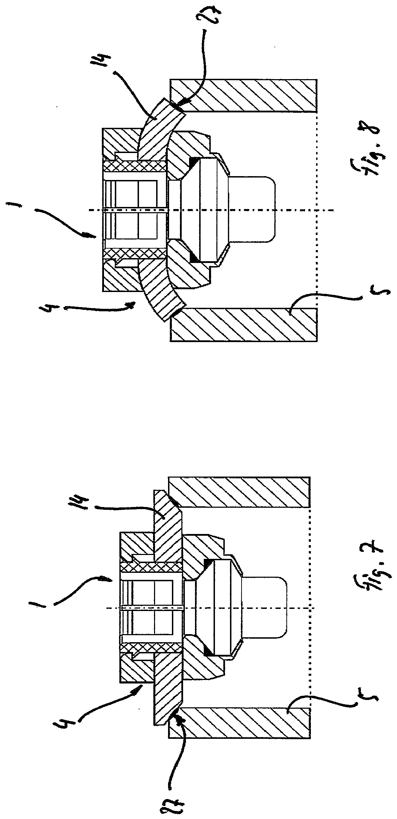

Fig. 7 zeigt eine mit einem Gehäuse 5 eines Gasgenerators verschweißte Anzündeinheit 1 mit einem Anzünderträger 4 mit gefastem Träger 14. Der Träger 14 weist eine Fase bzw. Konusfläche 27 auf und ist an dieser verschweißt.

Fig. 8 zeigt eine mit einem Gehäuse 5 eines Gasgenerators verschweißte Anzündeinheit 1 mit einem Anzünderträger 4 mit gewölbtem Träger 14. Der ehemals zylindrische bzw. scheibenförmige Träger bildet damit eine zu einer Konusfläche 27 umgeformte Mantelfläche.

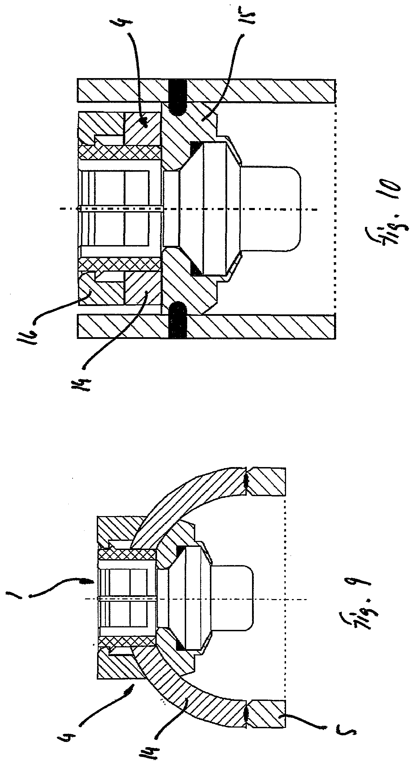

Fig. 9 zeigt eine mit einem Gehäuse 5 eines Gasgenerators verschweißte Anzündeinheit 1 mit einem Anzünderträger 4 mit kalottenförmigem Träger 14. Dieser Träger 14 eignet sich besonders für sehr hohe Beanspruchungen infolge hoher Innendrücke beim Betrieb des Gasgenerators.

Fig. 10 zeigt einen Anzünderträger 4 mit tragendem Anzünderring 15. Bei dieser Ausführung übernimmt der Anzünderring 15 die tragende Funktion. Dies kann unter bestimmten Einbausituationen erforderlich sein. Der Anzünderring 15 ist aufgrund der höheren Festigkeitsanforderung dann aus einem hochfesten Stahl hergestellt. Der Träger 14 und der Orientierungsring 16 können einstückig hergestellt sein.

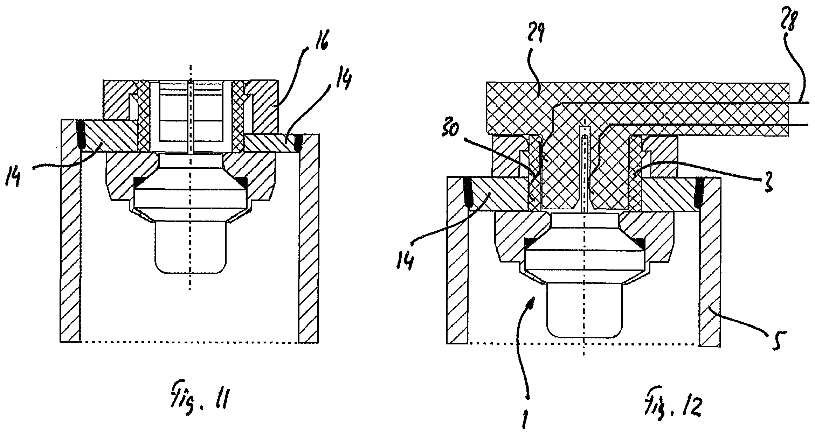

Fig. 11 zeigt einen Ausgleich einer reduzierten Trägerhöhe durch einen Orientierungsring 16. Die linke Zeichnungshälfte zeigt einen Träger 14 mit maximaler Materialstärke, die sich aus einer Blechdicke ergeben kann. Die rechte Zeichnungshälfte zeigt eine Variante, bei der der Träger 14 eine verringerte Materialstärke aufweist und der Orientierungsring 16 eine Höhe kompensiert.

Fig. 12 zeigt eine Kontaktierung über ein Verbinderteil 3 einer Anzündeinheit 1. Damit ist eine Erdung ermöglicht. Ein Erdungsanschluss 28 eines Steckers 29 kontaktiert elektrisch eine Kontaktfeder 30, welche in dem Verbinderteil 3 angeordnet ist und ihrerseits mit dem Träger 14 in elektrischem Kontakt steht. Der Träger 14 ist mit dem Gehäuse 5 des Gasgenerators verschweißt.

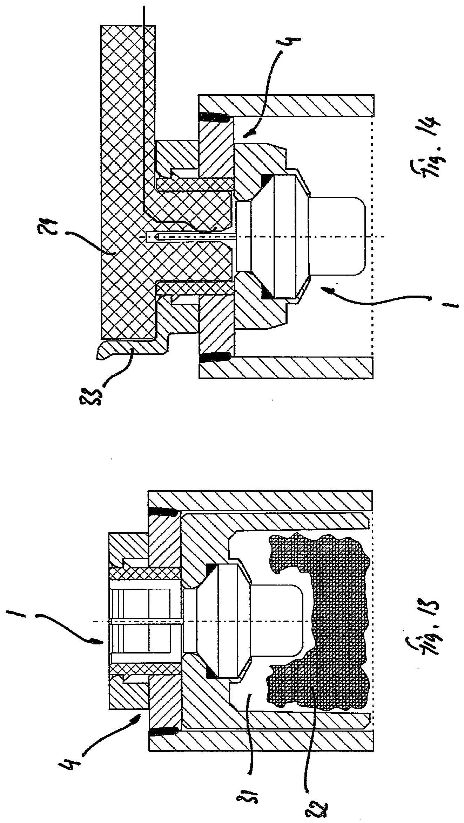

Fig. 13 zeigt eine Anzündeinheit 1 mit einem Anzünderträger 4, der eine Anzündkammer 31 bildet. In der Anzündkammer 31 ist ein Treibsatz 32 angeordnet.

Fig. 14 zeigt eine Anzündeinheit 1 mit einem Anzünderträger 4, der einen Konturabschnitt für einen Stecker 29 aufweist. Der Orientierungsring 16 weist einen anpepreßten Haken 33 als Einsteckhilfe und als Verdrehschutz für den Stecker 29 auf.

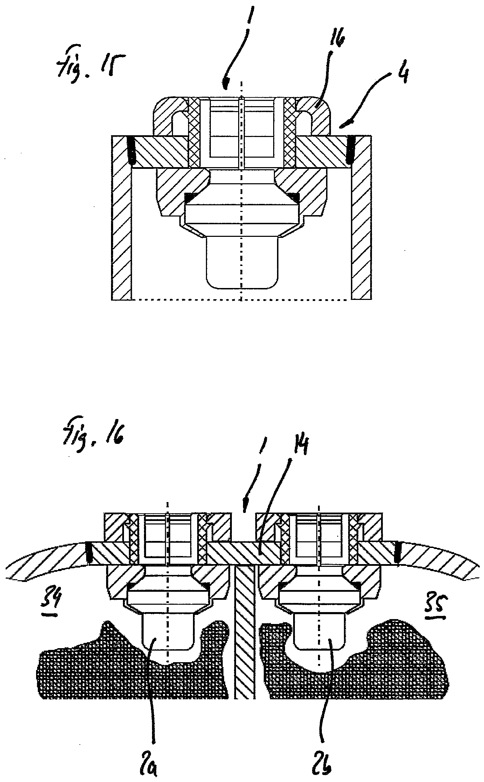

Fig. 15 zeigt Anzündeinheit 1 mit einem Anzünderträger 4 mit einem Orientierungsring 16 als Tiefziehteil.

Fig. 16 zeigt eine als Doppelanzündeinheit ausgeführte Anzündeinheit 1. Diese Anzündeinheit 1 ist in einem zweistufigen Gasgenerator mit zwei Kammern 34, 35 verwendbar. Die Anzündeinheit 1 ist zweistufig mit zwei Anzündern 2a, 2b bestückt, wobei der Träger 14 beide Anzünder 2a, 2b aufnimmt.

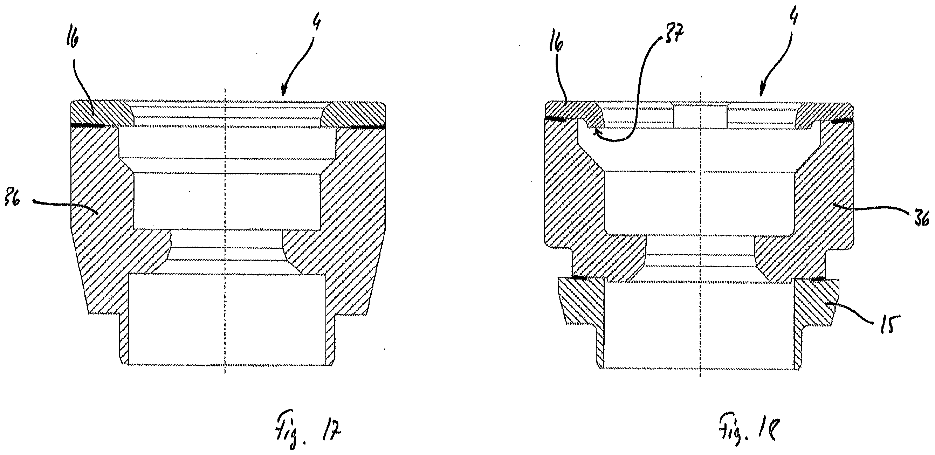

Fig. 17 zeigt einen zusammengesetzten Anzünderträger 4 mit einem aus einem Plattenmaterial gestanzten Orientierungsring 16. Träger und Anzünderring sind vorliegend einteilig als Träger/Anzünderring 36 ausgeführt. Der zusammengesetzten Anzünderträger 4 ist somit aus zwei Teilen zusammengesetzt. Der Orientierungsring 16 liegt auf dem Träger/Anzünderring 36 nach radial innen überkragend auf. Der Orientierungsring 16 ist mit dem Träger/Anzünderring 36 mittels Laserschweißen verbunden.

Fig. 18 zeigt einen dreiteiligen Anzünderträger 4 mit einem napfförmigen Orientierungsring 16 als Stanz- und Tiefziehteil aus einem dünnwandigen Plattenmaterial, vorzugsweise kleiner 1,45 mm. Der napfförmigen Orientierungsring 16 weist einen radial inneren Randabschnitt 37 auf, der zu dem Träger/Anzünderring 36 hin eingezogen ist. Der Träger/Anzünderring 36 ist ein Fließpressteil. Der Träger/Anzünderring 36 wird vorzugsweise aus Edelstahl hergestellt. Mit dem Träger/Anzünderring 36 ist ein Bördelring 38 zur Befestigung eines Anzünders verschweißt. Der Bördelring 38 ist ein Fließpressteil. Der Bördelring 38 ist beispielsweise aus einfachem Schwarzstahl hergestellt. Die Schweißungen sind in einem Laserschweißverfahren hergestellt.

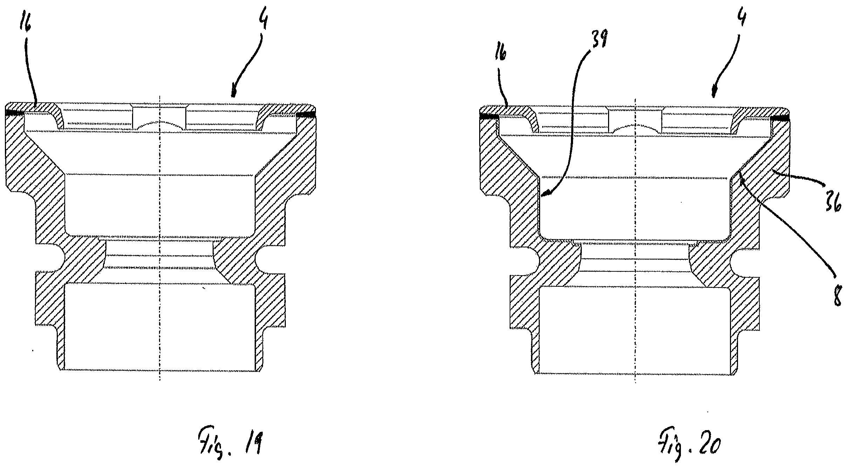

Fig. 19 zeigt einen Anzünderträger 4 mit einem napfförmigen Orientierungsring 16, der durch rollierendes Umformen aus einem Rohrabschnitt hergestellt ist. Alternativ kann eine Herstellung auch durch Krimpen erfolgen.

Fig. 20 zeigt einen Anzünderträger 4 mit einem Einsatz 39. Der Einsatz 39 ist an dem ersten Aufnahmeabschnitt 8 angeordnet. Der Einsatz 39 ist aus einem Edelstahl hergestellt. Der Einsatz 39 ist aus einem dünnen Blech tiefgezogen. Der Einsatz 39 weist eine napfartige Form auf. Der Einsatz 39 ist im Zuge einer Umformung des Orientierungsrings 16 gleich mit einformbar. Dafür ist ein äußerer Teil des Träger/Anzünderring 36 beispielsweise aus Schwarzstahl mit einer entsprechend erforderlichen Festigkeit hergestellt. Die Anforderung Korrosionsschutz ist aufgeteilt. Es wird hochwertiges Material eingespart. Der Einsatz 39 dient zum Korrosionsschutz und für eine sichere Kontaktierung einer dritten Polstelle. Der Korrosionsschutz ergibt sich nach Montage aller Bauteile inklusive Anzünder und Verbinderteil. Insbesondere durch den Anzünder, der in den Einsatz 39 ragt, den Einsatz 39 aus Edelstahl und den Orientierungsring 16 aus Edelstahl, alternativ Aluminium, wird ein abgeschlossener korrosionsgeschützter Raum geschaffen.

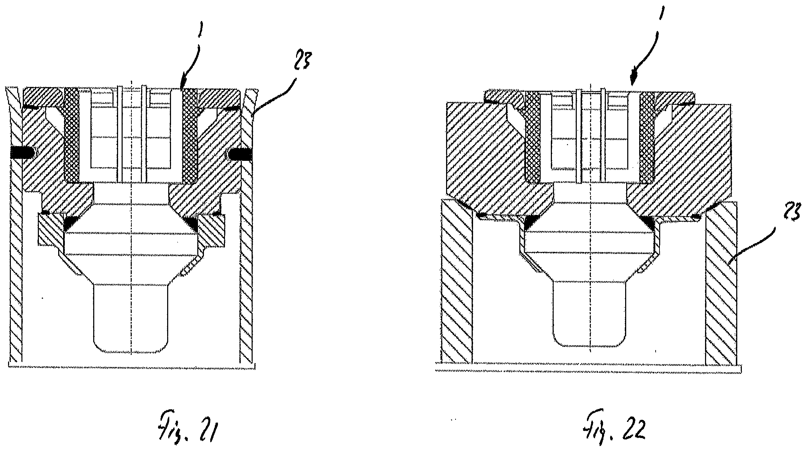

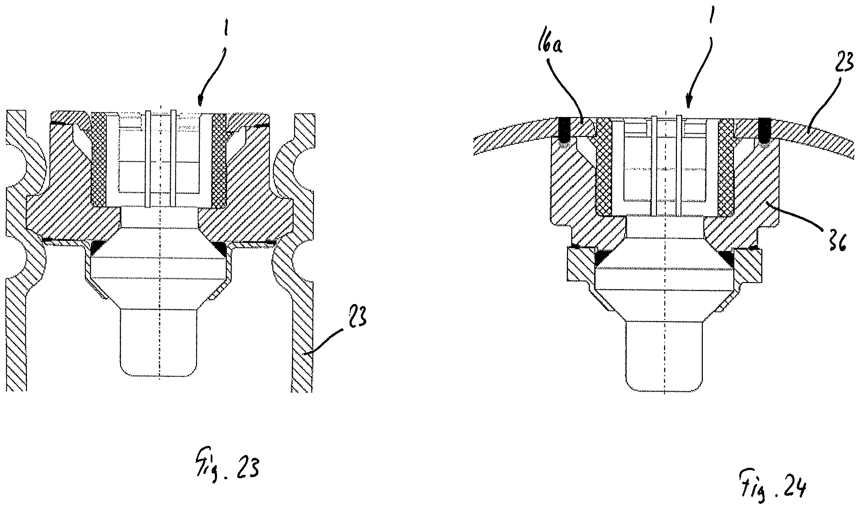

Fig. 21 zeigt eine mit einem Gehäuse 23 eines Gasgenerators laserverschweißte Anzündeinheit 1. Fig. 22 zeigt eine mit einem Gehäuse 23 eines Gasgenerators widerstandsverschweißte Anzündeinheit 1. Fig. 23 zeigt eine mit einem Gehäuse 23 eines Gasgenerators durch Krimpen/Rollieren verbundene Anzündeinheit 1.

Fig. 24 zeigt eine Anzündeinheit 1, wobei die Funktionen des Orientierungsrings durch einen Abschnitt 16a das Gehäuse 23 eines Gasgenerators übernommen werden. Der funktionelle Abschnitt 16a kann, so er nicht hervorsteht, mit seiner Außenseite bündig mit der Außenseite des Gehäuses 23 abschließen. Der Träger/Anzünderring 36 ist auf der Innenseite des Gehäuses 23 passend zu dem Abschnitt 16a angeordnet und mit dem Gehäuse 23 verschweißt. Vorzugsweise ist die Schweißverbindung als Durchschweißung mittels Laserschweißen realisiert.

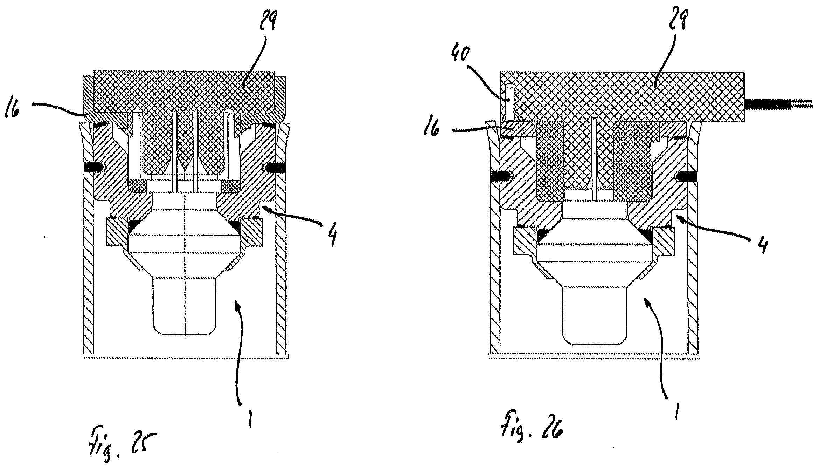

Fig. 25 zeigt eine Anzündeinheit 1 mit einem Anzünderträger 4, der eine abgewinkelte Platte auf Basis des Orientierungsrings 16 aufweist, die einen Stecker 29 führt und gegen Abdrehen sichert.

Fig. 26 zeigt eine Anzündeinheit 1 mit einem Anzünderträger 4, der einen Stift 40 zur Führung eines Steckers 29 aufweist. Der Stift 40 ist auf den Orientierungsring 16 geschweißt und dient zum Eingriff in ein Führungsloch des Steckers 29.

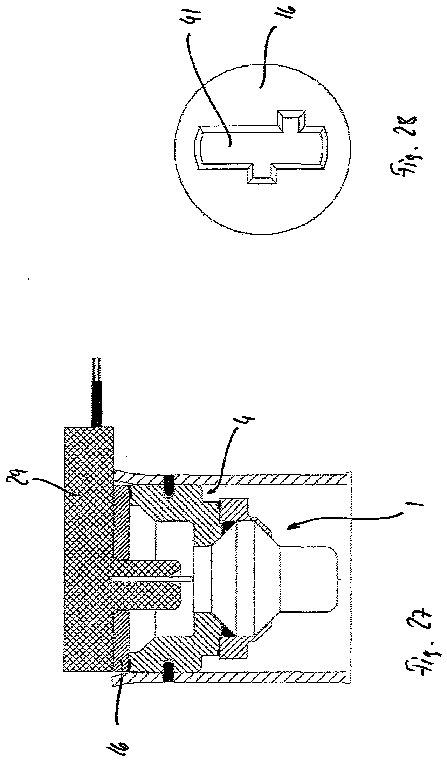

Fig. 27 zeigt eine Anzündeinheit 1 mit einem Anzünderträger 4, der einen Orientierungsring 16 mit einer konturierten Ausnehmung 41 zur orientierten Aufnahme eines Steckers 29 aufweist. Bei dieser Ausführung entfällt ein gesondertes Verbinderteil. Auch eine Kurzschlussfeder kann entfallen. Die Ausnehmung 41 weist eine Kontur auf, die einer negativen Querschnittskontur des Steckers 29 entspricht. Fig. 28 zeigt den Orientierungsring 16 mit einer beispielhaft konturierten Ausnehmung 41 in Draufsicht.

Im Übrigen wird hinsichtlich der Figuren 3-28 ergänzend insbesondere auf Fig. 1 und Fig. 2 sowie die zugehörige Beschreibung verwiesen.

### Bezugszeichen

- 1: Anzündeinheit
- 2: Anzünder
- 3: Verbinderteil
- 4: Anzünderträger
- 5: Gehäuse
- 6: Symmetrieachse
- 7: Anbindungsabschnitt
- 8: erster Aufnahmeabschnitt
- 9: zweiter Aufnahmeabschnitt
- 10: O-Ring-Dichtung
- 11: Randabschnitt
- 12: Kontakte
- 13: Rasthaken
- 14: Träger
- 15: Anzünderring
- 16: Orientierungsring
- 16a: Abschnitt
- 17: Anlagefläche
- 18: Anlagefläche
- 19: Anlagefläche
- 20: Fortsatz
- 21: Hinterschnitt
- 22: Schweißnaht
- 23: Gehäuseabschnitt
- 24: Rollierung
- 25: Innenraum
- 26: Umformung
- 27: Konusfläche
- 28: Erdungsanschluss
- 29: Stecker
- 30: Kontaktfeder
- 31: Anzündkammer
- 32: Treibsatz
- 33: Haken
- 34: Kammer
- 35: Kammer
- 36: Träger/Anzünderring
- 37: Randabschnitt
- 38: Bördelring
- 39: Einsatz
- 40: Stift
- 41: Ausnehmung

## Patentansprüche

1. Anzünderträger (4) für eine Anzündeinheit (1), insbesondere für einen Gasgenerator, aufweisend einen ersten Aufnahmeabschnitt (8) für einen Anzünder (2), einen zweiten Aufnahmeabschnitt (9) und einen Anbindungsabschnitt (7) zum Anbringen der Anzündeinheit (1), **dadurch gekennzeichnet, dass** der Anzünderträger (4) aus mehreren miteinander verbundenen Einzelteilen (14, 15, 16) vorgefertigt und seinerseits in einem Montageprozess als Einzelteil (4) einer Baugruppe (1) mit einem Anzünder (2) zusammenbaubar ist.

2. Anzünderträger (4) nach Anspruch 1, **dadurch gekennzeichnet, dass** der zweite Aufnahmeabschnitt (9) zur Aufnahme eines Verbinderteils (3) dient und der Anzünderträger (4) in einem Montageprozess als Einzelteil (4) einer Baugruppe (1) mit einem Anzünder (2) und einem Verbinderteil (3) zusammenbaubar ist.

3. Anzünderträger (4) nach wenigstens einem der vorhergehenden Ansprüche, **dadurch gekennzeichnet, dass** wenigstens zwei Einzelteile (14, 15; 14, 16) jeweils unterschiedliche Werkstoffe aufweisen.

4. Anzünderträger (4) nach wenigstens einem der vorhergehenden Ansprüche, **dadurch gekennzeichnet, dass** wenigstens zwei Einzelteile (14, 15, 16) miteinander stoffschlüssig verbunden sind.

5. Anzünderträger (4) nach wenigstens einem der vorhergehenden Ansprüche, **dadurch gekennzeichnet, dass** wenigstens ein Einzelteil (14, 15, 16) in einem Stanzverfahren und/oder in einem Umformverfahren hergestellt ist.

6. Anzünderträger (4) nach wenigstens einem der vorhergehenden Ansprüche, **dadurch gekennzeichnet, dass** wenigstens ein Einzelteil (36) einen Einsatz (39) aufweist und das wenigstens eine Einzelteil (36) und der Einsatz (39) jeweils unterschiedliche Werkstoffe aufweisen.

7. Anzünderträger (4) nach wenigstens einem der vorhergehenden Ansprüche, **dadurch gekennzeichnet, dass** ein zweites Einzelteil (15, 16) den ersten Aufnahmeabschnitt (8) und/oder den zweiten Aufnahmeabschnitt (9) aufweist.

8. Anzünderträger (4) nach wenigstens einem der vorhergehenden Ansprüche, **dadurch gekennzeichnet, dass** der Anzünderträger (4) einen mit einem Rastabschnitt (13) eines Verbinderteils (3) korrespondierenden Hinterschnittabschnitt (21) aufweist.

9. Anzünderträger (4) nach wenigstens einem der vorhergehenden Ansprüche, **dadurch gekennzeichnet, dass** der Anzünderträger (4) einen mit einem Führungsabschnitt eines Verbinderteils (3) korrespondierenden Führungsabschnitt aufweist.

10. Anzünderträger (4) nach wenigstens einem der vorhergehenden Ansprüche, **dadurch gekennzeichnet, dass** der Anzünderträger (4) einen Randabschnitt (11) aufweist, der zum Fixieren eines Anzünders (2) umformbar ist.

11. Anzünderträger (4) nach wenigstens einem der vorhergehenden Ansprüche, **dadurch gekennzeichnet, dass** der Anzünderträger (4) eine Anzündkammer (31) bildet.

12. Anzünderträger (4) nach wenigstens einem der vorhergehenden Ansprüche, **dadurch gekennzeichnet, dass** der Anzünderträger (4) einen Konturabschnitt (33) für ein mit dem Verbinderteil (3) zu verbindendes korrespondierendes Verbinderteil (29) aufweist.

13. Anzünderträger (4) nach wenigstens einem der vorhergehenden Ansprüche, **dadurch gekennzeichnet, dass** wenigstens ein Einzelteil (14, 15, 16) in ein Gehäuse (23) eines Gasgenerators integrierbar ist.

14. Anzündeinheit (1), insbesondere für einen Gasgenerator, aufweisend einen Anzünder (2), **dadurch gekennzeichnet, dass** die Anzündeinheit (1) einen Anzünderträger (4) nach wenigstens einem der vorhergehenden Ansprüche aufweist.

15. Verfahren zur Herstellung einer Anzündeinheit (1) nach Anspruch 14, umfassend wenigstens einen der Schritte Vorfertigen des Anzünderträgers (4), Einsetzen eines Dichtelements (10) in den Anzünderträger (4), Ausrichten des Anzünders (2), Einsetzen des Anzünders (2) in den Anzünderträger (4), Umformen eines Randabschnitts (11) des Anzünderträgers (4) zum Fixieren des Anzünders (2), Ausrichten eines Verbinderteils (3) und/oder Einsetzen des Verbinderteils (3) in den Anzünderträger (4).

## Claims

1. An igniter carrier (4) for an igniter unit (1), in particular for a gas generator, having a first receptacle section (8) for an igniter (2), a second receptacle section (9) and a connecting section (7) for attaching the igniter unit (1), **characterized in that** the igniter carrier (4) is prefabricated from a plurality of individual parts (14, 15, 16), which are connected to one another, and can be assembled as individual part (4) of an assembly (1) with an igniter (2) in an assembly process.

2. The igniter carrier (4) according to claim 1, **characterized in that** the second receptacle section (9) serves to receive a connecting part (3) and that the igniter carrier (4) can be assembled as individual part (4) of an assembly (1) with an igniter (2) and a connecting part (3) in an assembly process.

3. The igniter carrier (4) according to at least one of the preceding claims, **characterized in that** at least two individual parts (14, 15; 14, 16) each have different materials.

4. The igniter carrier (4) according to at least one of the preceding claims, **characterized in that** at least two individual parts (14, 15, 16) are connected to one another in an integrally bonded manner.

5. The igniter carrier (4) according to at least one of the preceding claims, **characterized in that** at least one individual part (14, 15, 16) is produced in a punching process and/or in a forming process.

6. The igniter carrier (4) according to at least one of the preceding claims, **characterized in that** at least one individual part (36) has an insert (39) and the at least one individual part (36) and the insert (39) each have different materials.

7. The igniter carrier (4) according to at least one of the preceding claims, **characterized in that** a second individual part (15, 16) has the first receiving section (8) and/or the second receiving section (9).

8. The igniter carrier (4) according to at least one of the preceding claims, **characterized in that** the igniter carrier (4) has an undercut section (21), which corresponds to a locking section (13) of a connecting part (3).

9. The igniter carrier (4) according to at least one of the preceding claims, **characterized in that** the igniter carrier (4) has a guide section, which corresponds to a guide section of a connecting part (3).

10. The igniter carrier (4) according to at least one of the preceding claims, **characterized in that** the igniter carrier (4) has an edge section (11), which can be formed to fix an igniter (2).

11. The igniter carrier (4) according to at least one of the preceding claims, **characterized in that** the igniter carrier (4) forms an igniting chamber (31).

12. The igniter carrier (4) according to at least one of the preceding claims, **characterized in that** the igniter carrier (4) has a contour section (33) for a corresponding connecting part (29), which is to be connected to the connecting part (3).

13. The igniter carrier (4) according to at least one of the preceding claims, **characterized in that** at least one individual part (14, 15, 16) can be integrated in a housing (23) of a gas generator.

14. An igniter unit (1), in particular for a gas generator, having an igniter (2), **characterized in that** the igniter unit (1) has an igniter carrier (4) according to at least one of the preceding claims.

15. A method for producing an igniter unit (1) according to claim 14, comprising at least one of the steps of prefabricating the igniter carrier (4), inserting a sealing element (10) into the igniter carrier (4), aligning the igniter (2), inserting the igniter (2) into the igniter carrier (4), forming an edge section (11) of the igniter carrier (4) to fix the igniter (2), aligning a connecting part (3) and/or inserting the connecting part (3) into the igniter carrier (4).

## Revendications

1. Support d'allumeur (4) pour une unité d'allumage (1), notamment pour un générateur à gaz, comportant une première partie réceptrice (8) pour un allumeur (2), une seconde partie réceptrice (9) et une partie de fixation (7) destinée à monter l'unité d'allumage (1), **caractérisé en ce que** le support d'allumeur (4) est préfabriqué à partir de plusieurs pièces détachées (14, 15, 16) réunies les unes aux autres et pour sa part, lors d'un processus de montage, peut être assemblé sous la forme d'une pièce détachée (4) d'un ensemble (1) avec un allumeur (2).

2. Support d'allumeur (4) selon la revendication 1, **caractérisé en ce que** la seconde partie réceptrice (9) sert à recevoir une pièce d'attache (3) et **en ce que** lors d'un processus de montage, le support d'allumeur (4) peut être assemblé sous la forme d'une pièce détachée (4) d'un ensemble (1) avec un allumeur (2) et avec une pièce d'attache (3).

3. Support d'allumeur (4) selon au moins l'une quelconque des revendications précédentes, **caractérisé en ce qu'**au moins deux pièces détachées (14, 15 ; 14, 16) présentent chaque fois au moins deux matières différentes

4. Support d'allumeur (4) selon au moins l'une quelconque des revendications précédentes, **caractérisé en ce qu'**au moins deux pièces détachées (14, 15, 16) sont reliées ensemble par matière.

5. Support d'allumeur (4) selon au moins l'une quelconque des revendications précédentes, **caractérisé en ce qu'**au moins une pièce détachée (14, 15, 16) est fabriquée lors d'un procédé de découpe et/ou lors d'un processus de déformation.

6. Support d'allumeur (4) selon au moins l'une quelconque des revendications précédentes, **caractérisé en ce qu'**au moins une pièce détachée (36) comporte un insert (39) et **en ce que** l'au moins une pièce détachée (36) et l'insert (39) présentent chacun des matières différentes.

7. Support d'allumeur (4) selon au moins l'une quelconque des revendications précédentes, **caractérisé en ce qu'**une deuxième pièce détachée (15, 16) comporte la première partie réceptrice (8) et/ou la seconde partie réceptrice (9).

8. Support d'allumeur (4) selon au moins l'une quelconque des revendications précédentes, **caractérisé en ce que** le support d'allumeur (4) comporte une partie de contre-dépouille (21) correspondant avec une partie d'enclenchement (13) d'une pièce d'attache (3).

9. Support d'allumeur (4) selon au moins l'une quelconque des revendications précédentes, **caractérisé en ce que** le support d'allumeur (4) comporte une partie de guidage correspondant avec une partie de guidage d'une pièce d'attache (3).

10. Support d'allumeur (4) selon au moins l'une quelconque des revendications précédentes, **caractérisé en ce que** le support d'allumeur (4) comporte une partie de bordure (11) qui est déformable pour fixer un allumeur (2).

11. Support d'allumeur (4) selon au moins l'une quelconque des revendications précédentes, **caractérisé en ce que** le support d'allumeur (4) forme une chambre d'allumage (31).

12. Support d'allumeur (4) selon au moins l'une quelconque des revendications précédentes, **caractérisé en ce que** le support d'allumeur (4) comporte une partie de contour (33) pour une pièce d'attache (29) correspondante qui doit être reliée avec la pièce d'attache (3).

13. Support d'allumeur (4) selon au moins l'une quelconque des revendications précédentes, **caractérisé en ce qu'**au moins une pièce détachée (14, 15, 16) est intégrable dans un boîtier (23) d'un générateur de gaz.

14. Unité d'allumage (1), notamment pour un générateur à gaz comportant un allumeur (2), **caractérisé en ce que** l'unité d'allumage (1) comporte un support d'allumeur (4) selon au moins l'une quelconque des revendications précédentes.

15. Procédé destiné à la fabrication d'une unité d'allumage (1) selon la revendication 14, comprenant au moins l'une des étapes de la préfabrication du support d'allumeur (4), de l'insertion d'un élément d'étanchéité (10) dans le support d'allumeur (4), de l'alignement de l'allumeur (2), de l'insertion de l'allumeur (2) dans le support d'allumeur (4), de la déformation d'une partie de bordure (11) du support d'allumeur (4), de la fixation de l'allumeur (2), de l'alignement d'une pièce d'attache (3) et/ou de l'insertion de la pièce d'attache (3) dans le support d'allumeur (4).
